# FASCICULE DE BREVET EUROPEEN

(11) **EP 3 159 872 B1**
(45) Date de publication et mention de la délivrance du brevet: **11.08.2021**
(21) Numéro de dépôt: 16161366.6
(22) Date de dépôt: 21.03.2016
(51) Int. Cl.: G09C 1/00, H04L 9/00

(54) **PUCE ÉLECTRONIQUE SÉCURISÉE AU MOYEN DE MULTIPLE CAISSONS**
GESICHERTER ELEKTRONISCHER CHIP UNTER VERWENDUNG VON MULTIPLE-WELL TECHNOLOGIE
MULTIPLE-WELL TECHNOLOGY FOR SECURE ELECTRONIC CHIP

(30) Priorité: 22.10.2015 FR 1560089
(43) Date de publication de la demande: 26.04.2017
(73) Titulaire: STMICROELECTRONICS (ROUSSET) SAS, 13790 Rousset (FR)
(72) Inventeur: SARAFIANOS, Alexandre, 13530 Trets (FR); FORT, Jimmy, 13114 Puyloubier (FR); CHAMPEIX, Clement, 13100 Aix-en-Provence (FR); DUTERTRE, Jean-Max, 13320 Bouc Bel Air (FR); BORREL, Nicolas, 13500 Martigues (FR)
(74) Mandataire: Cabinet Beaumont

(56) Documents cités:
- FR-A1- 2 981 783
- FR-A1- 2 986 633
- AKTAN O ET AL: "Optoelectronic CMOS Power Supply Unit for Electrically Isolated Microscale Applications", IEEE JOURNAL OF SELECTED TOPICS IN QUANTUM ELECTRONICS, IEEE SERVICE CENTER, PISCATAWAY, NJ, US, vol. 17, no. 3, 1 mai 2011 (2011-05-01), pages 747-756, XP011387943, ISSN: 1077-260X, DOI: 10.1109/JSTQE.2010.2096801
- DUTERTRE J M ET AL: "Improving the ability of Bulk Built-In Current Sensors to detect Single Event Effects by using triple-well CMOS", MICROELECTRONICS AND RELIABILITY, ELSEVIER SCIENCE LTD, GB, vol. 54, no. 9, 23 août 2014 (2014-08-23), pages 2289-2294, XP029093803, ISSN: 0026-2714, DOI: 10.1016/J.MICROREL.2014.07.151
- DODDS N A ET AL: "Effectiveness of SEL Hardening Strategies and the Latchup Domino Effect", IEEE TRANSACTIONS ON NUCLEAR SCIENCE, IEEE SERVICE CENTER, NEW YORK, NY, US, vol. 59, no. 6, 1 décembre 2012 (2012-12-01), pages 2642-2650, XP011487490, ISSN: 0018-9499, DOI: 10.1109/TNS.2012.2224374
- BORREL N ET AL: "Electrical model of an NMOS body biased structure in triple-well technology under photoelectric laser stimulation", 2015 IEEE INTERNATIONAL RELIABILITY PHYSICS SYMPOSIUM, IEEE, 19 avril 2015 (2015-04-19), XP032780951, DOI: 10.1109/IRPS.2015.7112799
- None

## Description

### Domaine

La présente demande concerne les puces électroniques, en particulier des puces électroniques sécurisées contre des attaques.

### Exposé de l'art antérieur

Des puces électroniques contenant des informations confidentielles, telles que des puces de cartes bancaires, sont susceptibles de subir des attaques de pirates visant à déterminer le fonctionnement de la puce et à en extraire les informations confidentielles. Une attaque peut être effectuée sur la puce en fonctionnement connectée entre les bornes d'une source d'alimentation. Une façon de réaliser une telle attaque consiste pour un pirate à balayer la surface de la puce avec un faisceau laser qui perturbe par impulsions le fonctionnement de la puce. C'est l'observation des conséquences de ces perturbations, parfois appelées fautes, sur l'activité du circuit, qui permet au pirate de mener à bien son attaque. Pour perturber le fonctionnement de la puce, le pirate peut aussi réaliser des contacts sur la surface de la puce et y appliquer des potentiels. Le pirate peut aussi disposer une bobine près de la surface de la puce afin d'émettre des perturbations électromagnétiques.

Il est souhaitable de disposer de puces électroniques protégées contre ce type d'attaque, dit attaque par injection de fautes, les dispositifs connus présentant divers inconvénients et difficultés de mise en oeuvre.

Les documents FR 2981783 et FR 2986683 décrivent des dispositifs de détection d'attaques de puces par laser. Les articles de O. Aktan et al. dans IEEE Journal of Selected Topics in Quantum Electronics 5, vol 17, N°3, mai/juin 2011, de J.M. Dutertre et al. dans Microelectronics Reliability 54 (2014) 2289-2294, de N.A. Dodds et al. dans IEEE Transactions on Nuclear Science, vol. 59, N°6, Dec. 2013, et de N. Borrel et al. dans IEEE International Reliability Physics Symposium, 19 avril 2015, décrivent diverses structures de puces dans lesquelles circulent des courants produits par des lasers.

### Résumé

Ainsi, un mode de réalisation prévoit une puce électronique sécurisée comprenant une pluralité de caissons semiconducteurs polarisés et un circuit de détection du courant de polarisation des caissons.

Selon un mode de réalisation, le circuit de détection est adapté à produire un signal d'alerte lorsque le courant de polarisation est supérieur, en valeur absolue, à un seuil.

Selon un mode de réalisation, le circuit de détection comprend un élément résistif parcouru par le courant de polarisation, le circuit de détection étant adapté à détecter une tension aux bornes de l'élément résistif.

Selon un mode de réalisation, l'élément résistif a une résistance comprise entre 1 et 100 Ω.

Selon un mode de réalisation, la puce électronique sécurisée comprend un circuit d'alimentation adapté à fournir un potentiel de polarisation desdits caissons, le circuit de détection étant adapté à détecter une variation d'un potentiel régulant le potentiel de polarisation.

Selon un mode de réalisation, le circuit d'alimentation comprend un amplificateur opérationnel dont la sortie est couplée à la grille d'un premier transistor MOS, et le circuit de détection comprend un deuxième transistor MOS formant un miroir de courant avec le premier transistor MOS, une entrée de l'amplificateur opérationnel et le drain du premier transistor MOS étant couplés auxdits caissons, et le circuit de détection étant adapté à détecter une variation du courant dans le deuxième transistor.

Selon un mode de réalisation, la pluralité de caissons comprend des premiers caissons d'un premier type de conductivité et des deuxièmes caissons d'un deuxième type de conductivité, le circuit de détection comprenant d'une part un premier circuit détectant le courant de polarisation des premiers caissons et d'autre part un second circuit détectant le courant de polarisation des deuxièmes caissons.

Selon un mode de réalisation, les premiers caissons sont formés dans la partie supérieure d'un substrat semiconducteur du deuxième type de conductivité et les deuxièmes caissons sont des parties supérieures du substrat comprises entre les premiers caissons.

Selon un mode de réalisation, les premiers caissons et les deuxièmes caissons s'étendent sur une couche enterrée dopée du premier type de conductivité recouvrant un substrat du deuxième type de conductivité.

Un autre mode de réalisation prévoit un procédé de sécurisation d'une puce électronique comportant une pluralité de caissons semiconducteurs polarisés, comprenant une étape de détection du courant de polarisation des caissons.

Selon un mode de réalisation, la puce contient des données confidentielles, le procédé comprenant, quand le courant de polarisation détecté est supérieur à un seuil, une étape de destruction des données confidentielles.

Selon un mode de réalisation, le procédé comprend, quand le courant de polarisation détecté est supérieur à un seuil, une étape d'arrêt de l'activité de la puce.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe partielle schématique d'une puce électronique d'un premier type ;
la figure 2 est une vue en coupe partielle schématique d'une puce électronique d'un deuxième type ;
la figure 3 représente un mode de réalisation d'une puce électronique du premier type protégée contre des attaques ;
la figure 4 représente un mode de réalisation d'une puce électronique du deuxième type protégée contre des attaques ; et
les figures 5A et 5B détaillent des modes de réalisation de circuits d'alimentation et de détection.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés.

Dans la description qui suit, lorsque l'on fait référence à des qualificatifs de position relative, tels que le terme "supérieur", il est fait référence à l'orientation de l'élément concerné dans les figures.

Dans la présente description, le terme "connecté" désigne une connexion électrique directe entre deux éléments, tandis que le terme "couplé" désigne une connexion électrique entre deux éléments qui peut être directe ou par l'intermédiaire d'un ou de plusieurs autres composants passifs ou actifs, comme des résistances, des condensateurs, des inductances, des diodes, des transistors, etc.

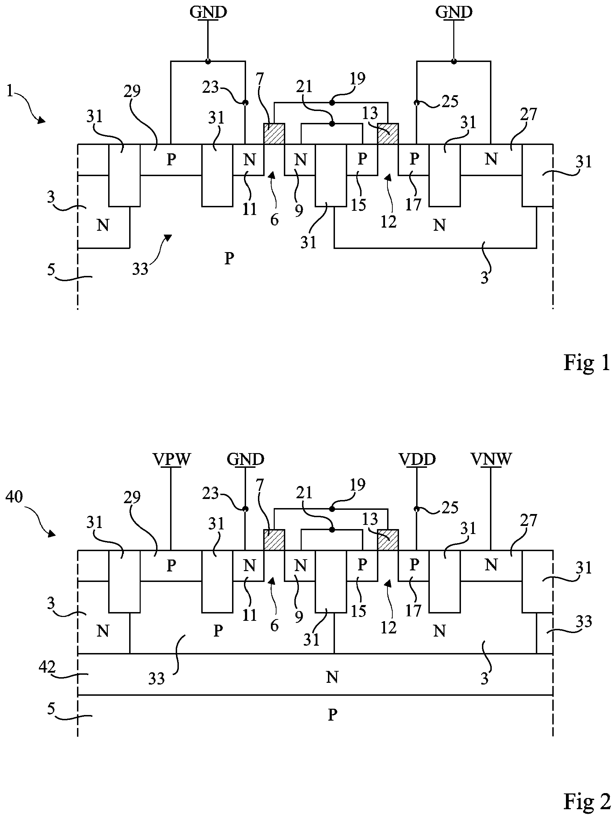

La figure 1 est une vue en coupe partielle schématique d'une puce électronique 1 d'un premier type comprenant des caissons semiconducteurs 3 dopés de type N formés dans la partie supérieure d'un substrat semiconducteur 5 dopé de type P. Par souci de clarté, seuls un caisson et une partie d'un autre caisson sont représentés en figure 1.

Des transistors MOS à canal N 6 sont formés dans et sur les parties du substrat situées entre les caissons 3 et comprennent des grilles 7 et des zones de drain et de source 9 et 11. Des transistors MOS à canal P 12 sont formés dans et sur les caissons 3 et comprennent des grilles 13 et des zones de drain et de source 15 et 17. Les transistors sont couplés entre eux pour composer des circuits, par exemple des circuits numériques. A titre d'exemple illustratif, un circuit logique inverseur entre des noeuds 19 et 21 est représenté. Les circuits numériques comprennent des noeuds d'alimentation 23 et 25. Dans l'exemple représenté, les noeuds d'alimentation 23 et 25 sont couplés respectivement aux sources 11 et 17 des transistors 6 et 12.

Les caissons 3 dopés de type N, ou caissons N, sont munis de contacts de polarisation 27 et le substrat est muni de contacts de polarisation 29. Les transistors et les contacts de polarisation sont séparés par des tranchées d'isolement 31.

Un potentiel de référence GND, par exemple la masse, est appliqué à la fois sur les noeuds d'alimentation 23 et sur les contacts de polarisation 29 des caissons P. Un circuit d'alimentation non représenté compris dans la puce fournit un potentiel VDD appliqué à la fois sur les noeuds d'alimentation 25 et sur les contacts de polarisation 27 des caissons N.

Dans la suite de la description, dans une puce électronique du premier type, on appellera caisson P les parties supérieures 33 du substrat comprises entre des caissons N.

La figure 2 est une vue en coupe partielle schématique d'une puce électronique 40 d'un deuxième type comprenant des caissons N 3 et des caissons P 33 s'étendant sur une couche enterrée 42 dopée de type N recouvrant un substrat 5 dopé de type P.

Les caissons 3 et 33 correspondent aux caissons 3 et 33 de la puce 1 décrite précédemment c'est-à-dire qu'ils comportent des contacts de polarisation 27 et 29 et des circuits numériques composés par des transistors 6, 12 formés dans et sur les caissons. Les circuits numériques sont munis de noeuds d'alimentation 23 et 25.

Les circuits numériques sont alimentés entre la masse GND et un potentiel VDD appliqués respectivement sur les noeuds 23 et 25. Des potentiels de polarisation VPW et VNW, pouvant ne pas être identiques aux potentiels GND et VDD, sont appliqués respectivement sur les contacts de polarisation 29 et 27, et sont fournis par des circuits d'alimentation non représentés compris dans la puce.

Comme on l'a indiqué en préambule, pour des circuits contenant des informations confidentielles, un pirate est susceptible de procéder à une analyse par injection de fautes. Des modes de détection de telles attaques sont décrits ci-après.

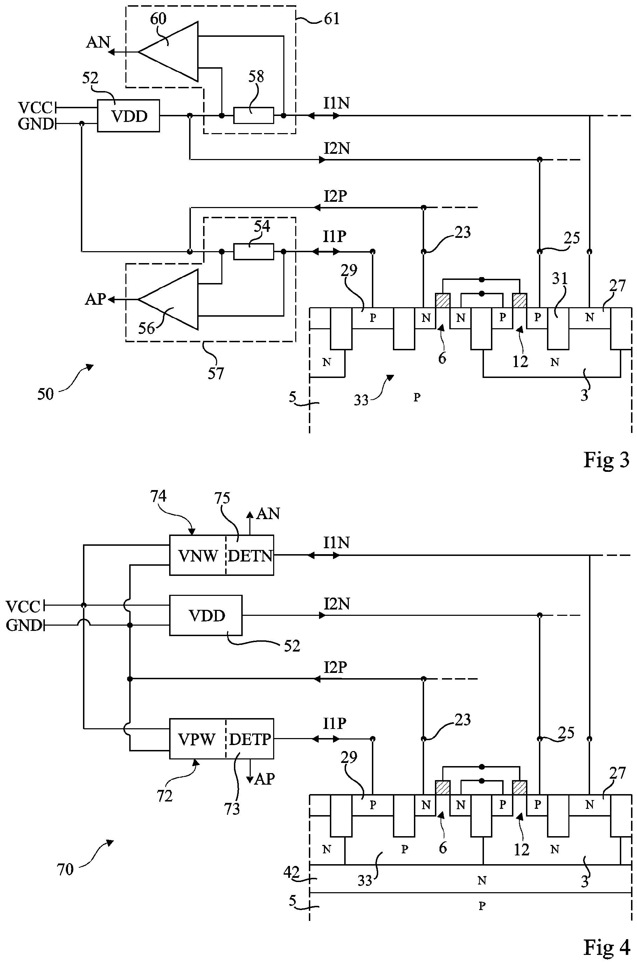

La figure 3 représente un mode de réalisation d'une puce électronique 50 du premier type protégée contre des attaques. La figure 3 comprend une vue en coupe partielle de la puce 50 et une représentation de circuits compris dans cette puce.

La puce 50 comprend des éléments de la puce 1 décrite en relation avec la figure 1 et notamment des caissons N 3 et des caissons P 33. Des circuits, par exemple des circuits numériques, comprennent des transistors 6 formés dans et sur les caissons P 33 et des transistors 12 formés dans et sur les caissons N 3. Les circuits numériques ont des noeuds d'alimentation 23 et 25 et les caissons 3 et 33 sont munis de contacts de polarisation respectifs 27 et 29. Les contacts de polarisation et les transistors sont séparés par des tranchées d'isolement 31.

Les noeuds d'alimentation 23 des circuits sont couplés à la masse. De plus, la puce 50 comprend un circuit d'alimentation 52 (VDD) qui fournit un potentiel VDD appliqué sur les noeuds d'alimentation 25. Le circuit d'alimentation 52 est lui-même alimenté entre un potentiel VCC positif et un potentiel de masse GND fournis par une source d'alimentation non représentée externe à la puce 50.

Les contacts de polarisation 29 des caissons P ne sont pas connectés directement à la masse, mais sont couplés à la masse par un élément résistif 54 compris dans la puce. La tension aux bornes de l'élément résistif 54 est comparée à un seuil par un circuit comparateur 56 adapté à produire un signal d'alerte AP lorsque cette tension est supérieure au seuil. L'élément résistif 54 et le circuit comparateur 56 constituent ainsi un circuit de détection 57 du courant de polarisation des caissons 33.

Les contacts de polarisation 27 des caissons N sont couplés au circuit d'alimentation 52 par un élément résistif 58. La tension aux bornes de l'élément résistif 58 est comparée à un seuil par un circuit comparateur 60 adapté à produire un signal d'alerte AN lorsque cette tension est supérieure au seuil. L'élément résistif 58 et le circuit comparateur 60 constituent ainsi un circuit de détection 61 du courant de polarisation des caissons 3.

En fonctionnement normal, les jonctions entre les caissons N et le substrat sont polarisées en inverse, et aucun courant de polarisation notable ne circule dans les éléments résistifs 54 et 58. Les seuils susmentionnés peuvent donc être très faibles.

Lors d'une tentative d'attaque de la puce par injection de fautes, par exemple au moment où un pirate bombarde la puce par un faisceau laser, des courants I1N et I1P apparaissent entre les contacts de polarisation 27 des caissons N 3 et les contacts de polarisation 29 des caissons P 33. Ces courants de polarisation I1N et I1P sont détectés par les circuits de détection 57 ou 61 et provoquent l'émission de signaux d'alerte AN ou AP. Le signal est utilisé par la puce pour prendre des contre-mesures comme suspendre ou arrêter son activité ou détruire des informations confidentielles qu'elle contient.

Lors d'une tentative d'attaque par un pirate, les courants I1P et I1N qui résultent d'une perturbation du fonctionnement de la puce sont analysés par la puce pour détecter l'attaque. Les courants de polarisation I1N et I1P utilisés pour détecter l'attaque correspondent directement aux courants résultant de la perturbation. Ainsi, la puce détecte une énergie injectée très inférieure à l'énergie minimale d'injection de faute. De ce fait, la puce 1 est avantageusement protégée contre toute attaque par injection de fautes, quelle que soit la localisation de l'attaque sur la surface de la puce.

A titre d'exemple, les résistances 54 et 58 peuvent être comprises entre 1 et 100 Ω. A titre de variante, les éléments résistifs 54 et 58 peuvent être des composants ou des portions de la puce, par exemple des portions de caissons, adaptés à produire une tension au passage d'un courant.

La figure 4 représente un mode de réalisation d'une puce électronique 70 du deuxième type protégée contre des attaques. La figure 4 comprend, de manière schématique, une vue en coupe partielle de la puce 70 et une représentation de circuits compris dans cette puce.

La puce 70 comprend des éléments de la puce 40 décrite en relation avec la figure 2 et notamment des caissons N 3 et des caissons P 33 s'étendant sur une couche enterrée 42 dopée de type N recouvrant un substrat 5 dopé de type P. Des circuits, par exemple des circuits numériques, formés dans et sur les caissons, ont des noeuds d'alimentation 23 et 25. Les caissons N 3 sont munis de contacts de polarisation 27 et les caissons P 33 sont munis de contacts de polarisation 29.

Les noeuds d'alimentation 23 des circuits numériques sont couplés à la masse. De plus, la puce 70 comprend un circuit d'alimentation 52 qui fournit un potentiel VDD appliqué sur les noeuds d'alimentation 25.

Les contacts de polarisation 29 des caissons P sont couplés à un circuit d'alimentation 72 qui produit un potentiel VPW. Le circuit d'alimentation 72 comprend un circuit de détection 73 (DETP) du courant de polarisation fourni aux caissons P. Le circuit de détection 73 est adapté à produire un signal AP lorsque le courant de polarisation est supérieur, en valeur absolue, à un seuil.

Les contacts de polarisation 27 des caissons N sont couplés à un circuit d'alimentation 74 qui produit un potentiel de polarisation VNW. Le circuit d'alimentation 74 comprend un circuit de détection 75 (DETN) du courant de polarisation fourni aux caissons N. Le circuit de détection 75 est adapté à produire un signal AN lorsque le courant de polarisation est supérieur, en valeur absolue, à un seuil.

Les circuits d'alimentation 52, 72 et 74 sont alimentés entre des potentiels VCC et GND fournis par un dispositif d'alimentation, non représenté, extérieur à la puce.

En cas d'attaque par injection de fautes, la détection par la puce 70 est similaire à la détection par la puce 50 de la figure 3. Les courants de polarisation I1 détectés par la puce sont séparés des courants I2 d'alimentation de l'activité normale de la puce. Dans le mode de réalisation de la puce 70, les potentiels de polarisation VNW et VPW peuvent être différents des potentiels d'alimentation VDD et GND, par exemple pour accélérer le fonctionnement de la puce, ou bien pour diminuer sa consommation.

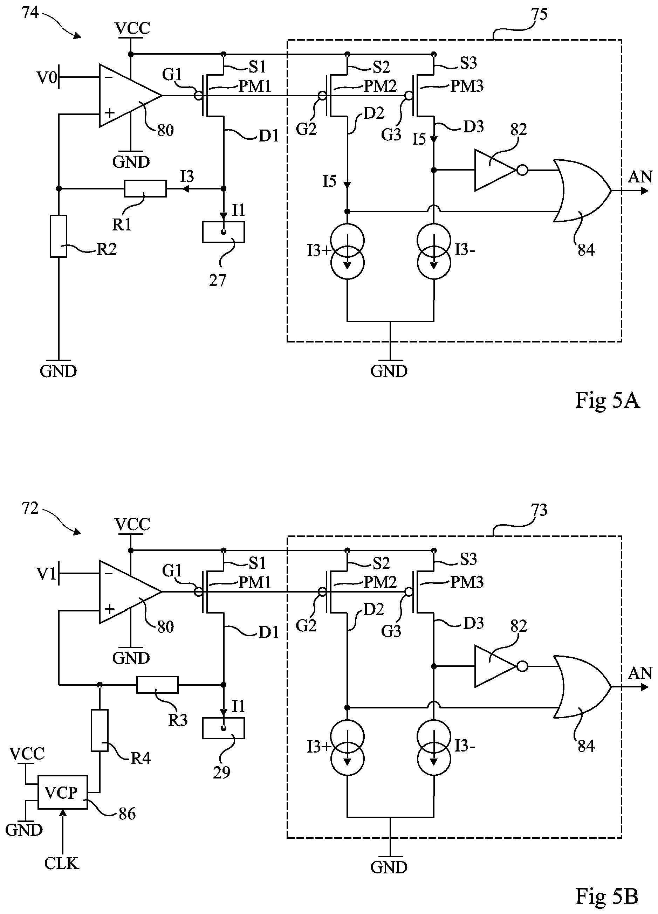

La figure 5A détaille un mode de réalisation d'un circuit d'alimentation 74 couplé à un contact 27 de polarisation d'un caisson N. Le circuit d'alimentation 74 comprend un amplificateur opérationnel 80 dont la sortie est couplée à la grille G1 d'un transistor PM1 de type MOS à canal P. Deux résistances R1 et R2 connectées en série couplent le drain D1 du transistor PM1 à la masse, le noeud commun entre les résistances étant couplé à l'entrée positive de l'amplificateur 80. Un potentiel régulé V0 est appliqué sur l'entrée négative de l'amplificateur 80. L'amplificateur 80 est alimenté entre la masse GND et un noeud d'application d'un potentiel VCC fourni par un dispositif extérieur d'alimentation. La source S1 du transistor PM1 est couplée au potentiel VCC. Les contacts de polarisation 27 sont couplés au drain D1.

Le circuit de détection 75 du circuit d'alimentation 74 comprend deux transistors PM2 et PM3 de type MOS à canal P, formant des miroirs de courant avec le transistor PM1, c'est-à-dire dont les grilles G2 et G3 sont couplées avec la grille G1 et les sources D2 et D3 sont couplées à la source S1. Le drain D2 du transistor PM2 est couplé à la masse par une source de courant qui prélève un courant I3+ sur le drain D2. Le drain D3 du transistor PM3 est couplé à la masse par une source de courant qui prélève un courant I3- sur le drain D3, le courant I3- étant inférieur au courant I3+. Un inverseur 82 couple le drain D3 à une entrée d'une porte OU 84 dont l'autre entrée est couplée au drain D2. L'activation de la sortie de la porte 84 produit le signal AN.

Lorsque le circuit 74 fonctionne, un courant I3 circule dans les résistances R1 et R2, le courant I3 étant choisi pour être compris entre les courants I3+ et I3-. Ce courant s'ajoute au courant de polarisation I1 dans le transistor PM1, et un courant I5 égal à I1 + I3 circule dans chacun des transistors PM2 et PM3.

En fonctionnement normal, le courant I5 est compris entre les courants I3- et I3+, et la sortie AN est désactivée.

En cas de tentative d'attaque, dès que le courant I5 sort de l'intervalle compris entre 13- et I3+, le potentiel du drain D2 augmente ou le potentiel du drain D3 diminue, et la sortie AN est activée. Autrement dit, l'apparition d'un courant I1 provoque une variation du potentiel fourni par l'amplificateur 80 qui régule la tension fournie par le circuit d'alimentation 74, et le circuit de détection 75 repère cette variation de potentiel pour détecter le courant I1. A titre de variante, le circuit de détection 75 peut être remplacé par tout circuit adapté à détecter une variation d'un potentiel de régulation d'un circuit d'alimentation.

La différence entre les courants I3 et 13- correspond au seuil de détection d'un courant I1 provenant du contact de polarisation 27 et la différence entre les courants I3 et I3+ correspond au seuil de détection d'un courant I1 circulant vers le contact de polarisation 27. A titre d'exemple, les seuils de détection sont compris entre 0,2 et 2 mA.

La figure 5B détaille un mode de réalisation d'un circuit d'alimentation 72 couplé à un contact 29 de polarisation d'un caisson N.

Le circuit d'alimentation 72 correspond au circuit d'alimentation 74 de la figure 5A, dans lequel les résistances R1 et R2 ont été remplacées par des résistances R3 et R4 en série couplant le drain D1 à un circuit d'alimentation 86, le noeud commun entre les résistances R3 et R4 étant couplé à l'entrée positive de l'amplificateur 80. A titre d'exemple, les circuits de détection 73 et 75 sont similaires.

Le circuit d'alimentation 86 produit un potentiel inférieur au potentiel de la masse, à partir du potentiel positif VCC et de la masse. Le circuit 86 peut être un circuit à pompe de charge synchronisé par une horloge (CLK) . A titre de variante, le circuit de détection 73 peut être remplacé par un circuit de détection adapté à repérer une variation d'un potentiel de régulation du circuit 86.

Des modes de réalisation particuliers ont été décrits. Diverses variantes et modifications apparaîtront à l'homme de l'art. En particulier, bien que dans les modes de réalisation décrits, les courants de polarisation des caissons P 33 et les courants de polarisation des caissons N 3 soient surveillés simultanément par deux circuits de détection, des variantes sont possibles dans lesquelles le courant de polarisation des caissons d'un seul type de conductivité est surveillé par un seul circuit de détection.

En outre, bien que dans les modes de réalisation décrits, les puces sécurisées comportent des circuits numériques comprenant des transistors MOS 6 et 12, des puces protégées de manière identique peuvent aussi comporter des circuits analogiques, par exemple comprenant des composants tels que des transistors bipolaires, des résistances ou des diodes, l'important étant que la puce comporte des caissons polarisés.

De plus, bien que, dans les modes de réalisation décrits, un substrat 5 dopé de type P ait été prévu, des variantes sont possibles dans lesquelles le substrat 5 est remplacé par un substrat dopé de type N ou par un support de type silicium sur isolant, ou encore par un support en un autre semiconducteur.

En outre, bien que des circuits de détection particuliers aient été détaillés dans les modes de réalisation décrits, d'autres circuits de détection adaptés à détecter un courant de polarisation sont possibles.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, chacun des circuits de détection 73 et 75 du mode de réalisation d'une puce sécurisée du deuxième type peut remplacer l'un ou l'autre des circuits de détection 57 et 61 du mode de réalisation d'une puce sécurisée du premier type.

De plus, des modes de réalisation adaptés à des puces de circuits intégrés d'un premier type et d'un deuxième type ont été décrits. Ce qui a été décrit s'applique bien évidemment à d'autres types de technologie de circuit intégré, comprenant divers types de caissons.

## Revendications

1. Puce électronique sécurisée (50 ; 70) comprenant dans un substrat (5) une pluralité de caissons semiconducteurs (3, 33) polarisés dopés de type N ou P et un circuit de détection (57, 61 ; 73, 75) du courant de polarisation des caissons, des transistors (6, 12) étant formés dans et sur les caissons, le circuit de détection (57, 61) étant :
relié aux caissons ;ou
relié à des contacts de polarisation (29) de parties (33) du substrat dans et sur lesquelles sont formés des transistors (6),
le circuit de détection (57, 61) étant **caractérisé en ce qu'**il comprend un élément résistif parcouru par le courant de polarisation, le circuit de détection étant adapté à détecter une tension aux bornes de l'élément résistif,
la puce électronique comprenant un circuit d'alimentation (72, 74) adapté à fournir un potentiel de polarisation desdits caissons (3, 33), le circuit de détection (73, 75) étant adapté à détecter une variation d'un potentiel régulant le potentiel de polarisation,
le circuit d'alimentation (72, 74) comprend un amplificateur opérationnel (80) dont la sortie est couplée à la grille d'un premier transistor MOS (PM1), et
le circuit de détection (73, 75) comprend un deuxième transistor MOS (PM2) formant un miroir de courant avec le premier transistor MOS, une entrée de l'amplificateur opérationnel et le drain du premier transistor MOS étant couplés auxdits caissons (3, 33), et le circuit de détection étant adapté à détecter une variation du courant dans le deuxième transistor.

2. Puce électronique selon la revendication 1, dans laquelle le circuit de détection (57, 61 ; 73, 75) est adapté à produire un signal d'alerte (AN, AP) lorsque le courant de polarisation est supérieur, en valeur absolue, à un seuil.

3. Puce électronique selon la revendication 1 ou 2, dans laquelle l'élément résistif (54, 58) a une résistance comprise entre 1 et 100 Ω.

4. Puce électronique (50 ; 70) selon l'une quelconque des revendications 1 à 3, dans laquelle la pluralité de caissons comprend des premiers caissons d'un premier type de conductivité et des deuxièmes caissons d'un deuxième type de conductivité, le circuit de détection comprenant d'une part un premier circuit détectant le courant de polarisation des premiers caissons et d'autre part un second circuit détectant le courant de polarisation des deuxièmes caissons.

5. Puce électronique (50) selon la revendication 4, dans laquelle les premiers caissons sont formés dans la partie supérieure d'un substrat semiconducteur (5) du deuxième type de conductivité et les deuxièmes caissons sont des parties supérieures du substrat comprises entre les premiers caissons.

6. Puce électronique (70) selon la revendication 4, dans laquelle les premiers caissons et les deuxièmes caissons s'étendent sur une couche enterrée (42) dopée du premier type de conductivité recouvrant un substrat (5) du deuxième type de conductivité.

7. Procédé de sécurisation d'une puce électronique selon l'une quelconque des revendications 1 à 6, comprenant, quand le courant de polarisation détecté est supérieur à un seuil, une étape de destruction de données confidentielles ou une étape d'arrêt de l'activité de la puce.

## Patentansprüche

1. Sicherer elektronischer Chip (50; 70) aufweisend, in einem Substrat (5), eine Vielzahl von N- oder P-dotierten Halbleiterwannen (3, 33) und eine Schaltung (57, 61; 73, 75) zur Detektion des Wannen-Bias-Stroms aufweist, wobei Transistoren (6, 12), innerhalb und auf den Wannen ausgebildet sind und wobei die Detektionsschaltung (57, 61):
mit den Wannen gekoppelt ist; oder
mit Bias-Kontakten (29) von Abschnitten (33) des Substrats gekoppelt ist, die Transistoren (6) aufweisen, die innerhalb und auf der Oberseite derselben ausgebildet sind,
wobei die Detektionsschaltung (57, 61) **dadurch gekennzeichnet ist, dass** sie ein Widerstandselement aufweist, das den Bias-Strom leitet, wobei die Detektionsschaltung ausgelegt ist zum Detektieren einer Spannung über dem Widerstandselement,
wobei der elektronische Chip eine Stromversorgungsschaltung (72, 74) aufweist, die geeignet ist, ein Potential zum Vorspannen der Wannen (3, 33) zu liefern, wobei die Detektionsschaltung (73, 75) geeignet ist zum Detektieren einer Änderung eines Potentials, die das Bias-Potential regelt,
wobei die Stromversorgungsschaltung (72, 74) einen Operationsverstärker (80) aufweist, dessen Ausgang mit dem Gate eines ersten MOS-Transistors (PM1) gekoppelt ist, und
wobei die Detektionsschaltung (73, 75) einen zweiten MOS-Transistor (PM2) aufweist, der mit dem ersten MOS-Transistor einen Stromspiegel bildet, wobei ein Eingang des Operationsverstärkers und der Drain des ersten MOS-Transistors mit den Wannen (3, 33) gekoppelt sind, und wobei die Detektionsschaltung geeignet ist zum Detektieren einer Änderung des Stroms im zweiten Transistor.

2. Elektronischer Chip nach Anspruch 1, wobei die Detektionsschaltung (57, 61; 73, 75) geeignet ist zum Erzeugen eines Alarmsignals (AN, AP), wenn der Bias-Strom im Absolutwert größer als ein Schwellenwert ist.

3. Elektronischer Chip nach Anspruch 1 oder 2, wobei das Widerstandselement (54, 58) einen Widerstand im Bereich von 1 bis 100 Ω aufweist.

4. Elektronischer Chip (50; 70) nach einem der Ansprüche 1 bis 3, wobei die Vielzahl von Wannen erste Wannen eines ersten Leitfähigkeitstyps und zweite Wannen eines zweiten Leitfähigkeitstyps aufweist, wobei die Detektionsschaltung einerseits eine erste Schaltung, die den Bias-Strom der ersten Wannen detektiert, und andererseits eine zweite Schaltung, die den Bias-Strom der zweiten Wannen detektiert, aufweist.

5. Elektronischer Chip (50) nach Anspruch 4, wobei die ersten Wannen in dem oberen Abschnitt eines Halbleitersubstrats (5) des zweiten Leitfähigkeitstyps ausgebildet sind und die zweiten Wannen obere Abschnitte des Substrats sind, die zwischen den ersten Wannen liegen.

6. Elektronischer Chip (70) nach Anspruch 4, wobei sich die ersten Wannen und die zweiten Wannen auf einer dotierten vergrabenen Schicht (42) des ersten Leitfähigkeitstyps erstrecken, die ein Substrat (5) des zweiten Leitfähigkeitstyps bedeckt.

7. Verfahren zum Sichern eines elektronischen Chips nach einem der Ansprüche 1 bis 6, aufweisend, wenn der detektierte Bias-Strom größer als ein Schwellenwert ist, einen Schritt der Zerstörung vertraulicher Daten oder einen Schritt des Anhaltens der Chipaktivität.

## Claims

1. Secure electronic chip (50; 70) comprising in a substrate (5) a plurality of N- or P-type doped semiconductor wells (3, 33) and a circuit (57, 61; 73, 75) of detection of the well bias current, transistors (6, 12) being formed inside and on top of the wells, the detection circuit (57, 61) being:
coupled to the wells; or
coupled to bias contacts (29) of portions (33) of the substrate having transistors (6) formed inside and on top thereof,
the detection circuit (57, 61) being **characterized in that** it comprises a resistive element conducting the bias current, the detection circuit being adapted to detecting a voltage across the resistive element,
the electronic chip comprising a power supply circuit (72, 74) adapted to supplying a potential for biasing said wells (3, 33), the detection circuit (73, 75) being adapted to detecting a variation of a potential regulating the bias potential,
the power supply circuit (72, 74) comprises an operational amplifier (80) having its output coupled to the gate of a first MOS transistor (PM1), and
the detection circuit (73, 75) comprises a second MOS transistor (PM2) forming a current mirror with the first MOS transistor, an input of the operational amplifier and the drain of first MOS transistors being coupled to said wells (3, 33), and the detection circuit being adapted to detecting a variation of the current in the second transistor.

2. Electronic chip according to claim 1, wherein the detection circuit (57, 61; 73, 75) is adapted to generating an alert signal (AN, AP) when the bias current is greater, in absolute value, than a threshold.

3. Electronic chip according to claim 1 or 2, wherein the resistive element (54, 58) has a resistance in the range from 1 to 100 Ω.

4. Electronic chip (50; 70) according to any of claims 1 to 3, wherein the plurality of wells comprises first wells of a first conductivity type and second wells of a second conductivity type, the detection circuit comprising on the one hand a first circuit detecting the bias current of the first wells and on the other hand a second circuit detecting the bias current of the second wells.

5. Electronic chip (50) according to claim 4, wherein the first wells are formed in the upper portion of a semiconductor substrate (5) of the second conductivity type and the second wells are upper portions of the substrate located between the first wells.

6. Electronic chip (70) according to claim 4, wherein the first wells and the second wells extend on a doped buried layer (42) of the first conductivity type covering a substrate (5) of the second conductivity type.

7. Method of securing an electronic chip according to any of claims 1 to 6, comprising, when the detected bias current is greater than a threshold, a step of destruction of confidential data or a step of stopping of the chip activity.
